# FASCICULE DE BREVET EUROPEEN

(11) **EP 1 169 654 B1**
(45) Date de publication et mention de la délivrance du brevet: **21.02.2007**
(21) Numéro de dépôt: 00918934.1
(22) Date de dépôt: 11.04.2000
(51) Int. Cl.: G01T 1/24, G01T 1/29

(54) **DETECTEUR BIDIMENSIONNEL DE RAYONNEMENTS IONISANTS ET PROCEDE DE FABRICATION DE CE DETECTEUR**
ZWEIDIMENSIONALER DETEKTOR FÜR IONISIERENDE STRAHLUNG UND ZUGEHÖRIGES HERSTELLUNGSVERFAHREN
TWO DIMENSIONAL IONIZING RADIATION DETECTOR AND METHOD FOR THE PRODUCTION THEREOF

(30) Priorité: 15.04.1999 FR 9904725
(43) Date de publication de la demande: 09.01.2002
(73) Titulaire: COMMISSARIAT A L'ENERGIE ATOMIQUE, 75015 Paris (FR)
(72) Inventeur: GERSTENMAYER, Jean-Louis, F-91400 Orsay (FR)
(74) Mandataire: Ilgart, Jean-Christophe
(86) Numéro de dépôt international: PCT/FR2000/000917
(87) Numéro de publication internationale: WO 2000/063723

(56) Documents cités:
- US-A- 4 210 805
- US-A- 5 117 114
- JEAVONS A P ET AL: "The high-density multiwire drift chamber" NUCLEAR INSTRUMENTS AND METHODS, 1 MARCH 1975, NETHERLANDS, vol. 124, no. 2, pages 491-503, XP002123000 ISSN: 0029-554X cité dans la demande

## Description

### DOMAINE TECHNIQUE

La présente invention concerne un détecteur bidimensionnel de rayonnements ionisants ainsi qu'un procédé de fabrication de ce détecteur.

A titre d'exemple, l'invention est utilisable pour détecter les photons X, les photons gamma, les protons, les neutrons et les muons.

L'invention s'applique notamment aux domaines suivants :
- expérimentations en détonique,
- contrôle non destructif rapide,
- positionnement de patients en radiothérapie,
- physique des hautes énergies,
- neutronographie, protonographie, radiographie, gammagraphie,
- chirurgie sous radioscopie, et
- sécurité dans les aéroports.

### ÉTAT DE LA TECHNIQUE ANTÉRIEURE

On connaît déjà des détecteurs bidimensionnels de rayonnements ionisants qui sont constitués de plaques faites d'un métal lourd comme le plomb ou, plus généralement, d'un matériau capable d'interagir avec un rayonnement ionisant incident.

En particulier, US 5 117 114 A décrit un détecteur de rayonnement. Dans un exemple le détecteur comprend une suite de matrices de détection planes et parallèles. Chaque matrice comprend un ensemble de cellules de détection en silicium amorphe munies d'électrodes d'adressage et une couche adjacente d'un matériau métallique de conversion tel que Pb ou U. Cela permet de déterminer l'énergie et la position initiale d'un photon X ou γ qui arrive sur la première couche de matériau métallique de conversion, perpendiculairement à cette couche.

US 4 210 805 A décrit un détecteur de rayonnement.

Dans un exemple, huit éléments semiconducteurs 30 sont agencés en matrice. Deux faces opposées de chaque élément sont recouvertes de couches conductrices et les deux autres faces sont recouvertes de couches isolantes qui les séparent d'éléments voisins.

A titre d'exemple, il est connu d'utiliser un métal de numéro atomique Z supérieur ou égal à 73 pour la détection de photons X ou gamma et un matériau de numéro atomique Z généralement inférieur à 14 ou supérieur à 90 pour la détection de neutrons. D'autres matériaux, tels que le Gadolinium (Z=64), sont également utilisables pour détecter des neutrons.

Les plaques sont percées de trous par attaque chimique ou électrochimique et isolées électriquement les unes des autres si cela est nécessaire (lorsque l'épaisseur des plaques vaut quelques centaines de micromètres ou plus).

Les trous sont remplis d'un gaz ionisable.

Un photon incident X ou gamma, de haute énergie, engendre alors, par effet Compton ou effet de création de paires, au moins un photo-électron dans l'une des plaques du détecteur.

Ce photon incident X ou gamma communique à cet électron un mouvement rapide, avec une énergie cinétique de l'ordre de grandeur de celle du photon incident ; cet électron rapide ionise alors certaines molécules du gaz contenu dans l'un des trous auquel parvient l'électron et que ce dernier traverse en général.

Les électrons secondaires lents, qui sont arrachés à ces molécules du fait de l'ionisation de ces dernières, sont guidés le long de ce trou et collectés à l'aide d'un champ électrique de polarisation (« bias »), encore appelé champ électrique de dérive (« drift »), puis détectés par exemple dans une chambre à ionisation ou dans une chambre à avalanches proportionnelles.

De tels détecteurs bidimensionnels sont par exemple décrits dans les documents [1], [2], [3], [4] et [5] qui sont mentionnés à la fin de la présente description.

Le choix d'une structure de détection à trous vient de ce qu'une telle structure est connue pour être très favorable à l'obtention d'une bonne résolution spatiale et d'un bon rendement, à condition que les trous soient parfaitement formés et suffisamment larges.

Une attaque chimique (« chemical etching ») est utilisée pour former ces trous : elle est préférée à la découpe par jet d'eau qui engendre un choc frontal lors de l'ouverture du jet, au commencement du perçage d'un trou.

Ce choc frontal écaille le matériau dans lequel on veut former les trous, ce qui provoque un éclatement de ce matériau et le rend impropre à une utilisation.

Mais l'attaque chimique est une technique lente et coûteuse.

De plus, le rendement de collection des électrons secondaires et donc le rendement de ces détecteurs à trous sont limités du fait de l'utilisation de cette technique : seulement 10% à 30% des électrons secondaires créés à chaque ionisation du gaz sont collectés.

En effet, une attaque chimique ne permet pas d'obtenir des trous dont les parois internes soient suffisamment cylindriques car elle engendre des étranglements dans les trous, ce qui déforme les lignes du champ électrique et réduit le diamètre utile de ces trous, d'où un rendement global limité pour les détecteurs à trous.

### EXPOSÉ DE L'INVENTION

La présente invention a pour but de remédier à ces inconvénients de coût élevé et de rendement limité.

De façon précise, la présente invention a pour objet un détecteur bidimensionnel d'un rayonnement ionisant incident constitué de premières particules, ce détecteur comprenant un empilement de feuilles d'un premier matériau qui est apte à émettre des deuxièmes particules par interaction avec le rayonnement ionisant incident, ce détecteur étant caractérisé en ce qu'il comprend en outre :
- des couches d'un matériau semiconducteur qui alternent avec les feuilles du premier matériau et sont capables d'être ionisées par les deuxièmes particules, chacune des couches étant associée à l'une des feuilles, l'empilement ayant des première et deuxième faces opposées, contenant chacune des bords respectifs des feuilles et des couches, la première face étant celle qui reçoit le rayonnement ionisant incident, la longueur de chaque feuille, comptée de la première à la deuxième face, étant au moins égale au dixième du libre parcours moyen des premières particules dans le premier matériau,
- des groupes de pistes parallèles et électriquement conductrices qui s'étendent de la première à la deuxième face, parallèlement aux couches, chaque groupe étant associé à l'une des couches et en contact avec celle-ci, les pistes étant destinées à collecter des porteurs de charge qui sont engendrés dans les couches par interaction de celles-ci avec les deuxièmes particules et éventuellement avec les premières particules et qui sont représentatifs, en intensité et en position, des premières particules, et
- des moyens de création d'un champ électrique apte à provoquer la collection des porteurs de charge par les pistes.

Le détecteur objet de l'invention est réalisable avec un coût beaucoup plus faible que celui des détecteurs à trous, mentionnés plus haut.

De plus, le rendement de collection et la résolution spatiale du détecteur objet de l'invention sont susceptibles d'être très supérieurs à ceux de ces détecteurs à trous.

Selon un mode de réalisation particulier du détecteur objet de l'invention, le premier matériau est électriquement conducteur, les pistes sont électriquement isolées des feuilles et les moyens de création du champ électrique comprennent des moyens d'application d'une tension électrique entre les pistes et les feuilles, cette tension étant apte à provoquer la collection des porteurs de charge par les pistes.

De préférence, chaque groupe de pistes est contenu dans la couche à laquelle il est associé.

Dans ce cas, selon un autre mode de réalisation particulier, le premier matériau est électriquement conducteur et les moyens de création du champ électrique comprennent des moyens d'application d'une tension électrique entre les pistes et les feuilles, cette tension étant apte à provoquer la collection des porteurs de charge par les pistes.

Selon un autre mode de réalisation particulier, les feuilles sont électriquement isolantes, une couche électriquement conductrice est interposée entre chaque couche de matériau semiconducteur et la feuille qui lui est associée et les moyens de création du champ électrique comprennent des moyens d'application d'une tension électrique entre les pistes et les couches électriquement conductrices, cette tension étant apte à provoquer la collection des porteurs de charge par les pistes.

Le matériau semiconducteur peut être de type cristallin, céramique, vitreux, amorphe ou polymère.

Il peut être choisi dans le groupe comprenant le diamant en couche mince, CdTe, ZnTe, CdZnTe, AsGa notamment de type AsGaAlₓP₁₋ₓ (0<x<1), InP, InSb, SiC, le silicium cristallin, le silicium amorphe, les cristaux organiques comme par exemple l'anthracène, le naphtalène et le PPV, le sélénium amorphe et le verre chalcogénure (As₂S₃).

Le détecteur objet de l'invention peut comprendre en outre un dispositif électronique de lecture des signaux électriques fournis par les pistes lorsque celles-ci collectent les porteurs de charge.

Selon un mode de réalisation préféré de l'invention, une extrémité de chaque piste est recourbée pour s'étendre sur un bord de la couche correspondante de matériau semiconducteur, ce bord étant situé sur la deuxième face de l'empilement, et le dispositif comprend des plots électriquement conducteurs qui sont respectivement en contact avec les extrémités recourbées des pistes.

La présente invention concerne aussi un procédé de fabrication du détecteur objet de l'invention.

Selon ce procédé on forme, sur chaque feuille, une couche du matériau semiconducteur, cette couche étant munie du groupe de pistes qui lui est associé et l'on assemble les feuilles munies des couches de matériau semiconducteur et des pistes pour obtenir l'empilement où ces couches de matériau semiconducteur alternent avec les feuilles.

Selon un mode de mise en oeuvre particulier du procédé objet de l'invention, on forme sur chaque feuille une première couche de matériau semiconducteur dont l'épaisseur est inférieure à celle de ladite couche de matériau semiconducteur, on forme le groupe de pistes sur cette première couche et l'on forme, sur la première couche, une deuxième couche de matériau semiconducteur qui recouvre ces pistes, l'épaisseur totale des première et deuxième couches étant égale à l'épaisseur de ladite couche de matériau semiconducteur.

On peut aussi déposer, sur deux faces opposées de deux feuilles successives, une demi-couche du matériau semiconducteur puis former sur l'une des demi-couches le groupe de pistes et assembler les feuilles ainsi recouvertes pour obtenir l'empilement où les couches alternent avec les feuilles.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en perspective schématique d'un mode de réalisation particulier du détecteur objet de l'invention,
- la figure 2 est une vue en coupe transversale schématique du détecteur de la figure 1, selon le plan P de celle-ci,
- la figure 3 est une vue en perspective coupée schématique d'un autre détecteur conforme à l'invention, et
- la figure 4 est une vue en perspective schématique et partielle d'un autre détecteur conforme à l'invention.

### EXPOSÉ DÉTAILLÉ DE MODES DE RÉALISATION PARTICULIERS

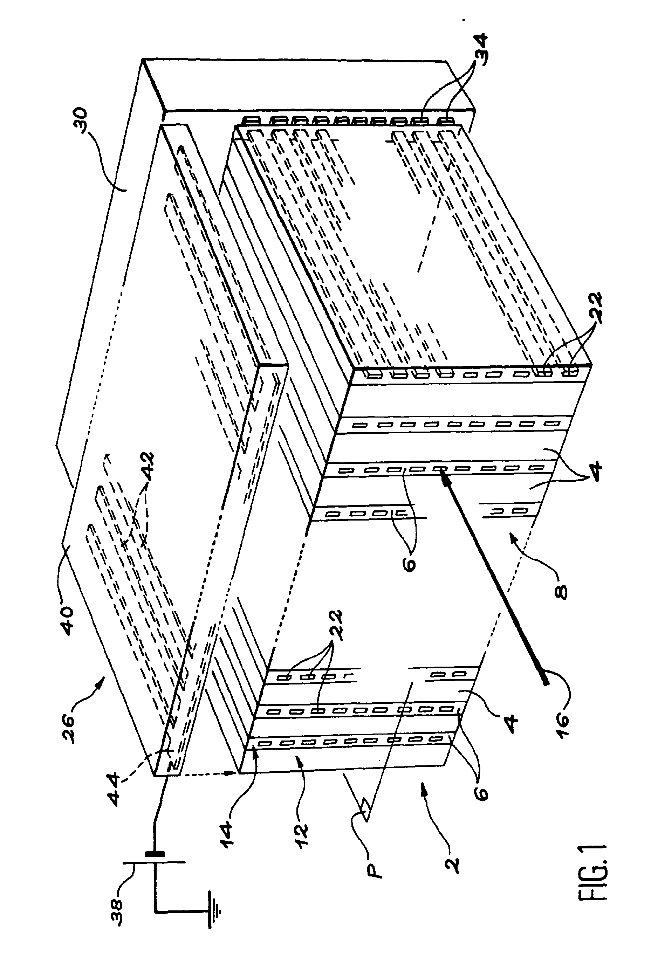

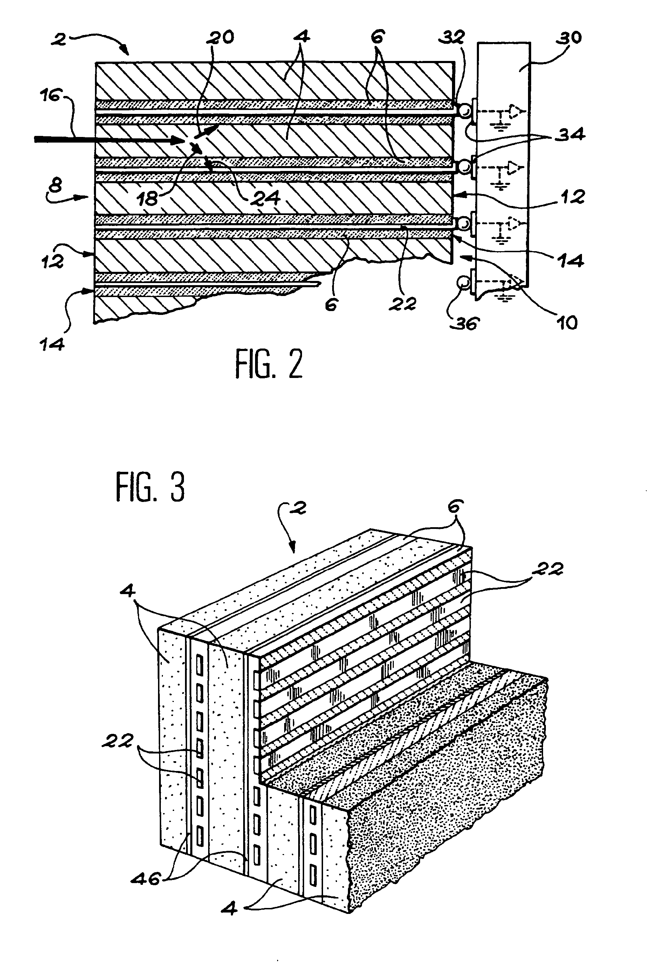

Un détecteur de rayonnement ionisant conforme à l'invention est schématiquement représenté en perspective sur la figure 1 et en coupe transversale suivant un plan P sur la figure 2.

Dans l'exemple représenté, le rayonnement ionisant est constitué de photons X qui ont par exemple une énergie de 5 MeV.

Le détecteur des figures 1 et 2 comprend un empilement 2 de feuilles 4 d'un matériau électriquement conducteur qui est apte à émettre des électrons par interaction avec les photons X du rayonnement ionisant incident.

Ce détecteur comprend aussi des couches 6 d'un matériau semiconducteur qui alternent avec les feuilles 4 et sont capables d'être ionisées par les photo-électrons émis par le matériau conducteur lorsque celui-ci interagit avec les photons X et éventuellement directement, bien que dans une moindre proportion, par les photons X primaires.

Chacune des couches 6 est associée à l'une des feuilles 4.

L'empilement des feuilles 4 et des couches 6 a une première face 8 et une deuxième face 10 qui sont opposées.

Chacune des faces 8 et 10 contient des bords 12 des feuilles 4 et des bords 14 des couches 6 qui alternent avec les bords 12 des feuilles 4.

Le détecteur des figures 1 et 2 est orienté de façon que le rayonnement ionisant à détecter arrive sur la face 8.

La longueur de chaque feuille 4, comptée de la face 8 à la face 10, est au moins égale au dixième du libre parcours moyen des photons X dans le matériau conducteur dont sont constituées les feuilles 4.

Comme on le voit sur les figures 1 et 2, un photon X incident, dont la trajectoire a la référence 16 sur les figures 1 et 2, interagit avec le matériau conducteur d'une feuille 4 pour produire, par effet Compton, photoélectrique ou de création de paires, un électron de grande énergie cinétique, dont la trajectoire est représentée par la flèche 18 sur la figure 2.

On a également représenté par une flèche 20 sur la figure 2 la trajectoire du photon d'énergie inférieure à celle du photon X incident, qui résulte de l'interaction de ce dernier avec le matériau conducteur de la feuille 4.

Le détecteur des figures 1 et 2 comprend aussi des groupes de piste 22 parallèles et électriquement conductrices qui s'étendent de la face 8 à la face 10, parallèlement aux couches 6.

Chaque groupe de pistes 22 est associé à l'une des couches 6 et en contact avec celle-ci.

Les pistes 22 sont destinées à collecter des porteurs de charge qui sont engendrés dans les couches 6 par interaction de celles-ci avec les électrons résultant de l'interaction des photons X incidents avec le matériau conducteur dont sont faites les feuilles 4.

Ces porteurs de charge sont représentatifs, en intensité et en position, des photons X incidents.

On voit sur la figure 2 un porteur de charge dont la trajectoire a la référence 24 et qui résulte de l'interaction de l'électron ayant la trajectoire 18 avec une couche 6 et ce porteur de charge ayant la trajectoire 24 est collecté par une piste conductrice 22 associée à cette couche 6.

Le détecteur comprend aussi des moyens 26 (figure 1) de création d'un champ électrique apte à provoquer la collection des porteurs de charge par les pistes 22.

A titre purement indicatif et nullement limitatif, le détecteur des figures 1 et 2 est disposé de façon que les feuilles 4 et les couches 6 soient horizontales ou, au contraire, verticales mais d'autres orientations sont envisageables, suivant l'utilisation qui est faite du détecteur.

Il convient simplement que les feuilles 4 et les couches 6 soient sensiblement parallèles à la direction du rayonnement ionisant à détecter.

Dans l'exemple représenté sur les figures 1 et 2, chaque groupe de pistes conductrices 22 est contenu dans la couche 6 à laquelle est associé ce groupe.

Cela évite d'avoir à utiliser des supports électriquement isolants (par exemple en matière plastique ou en céramique) pour les pistes, supports qui sont encombrants, ce qui diminue la résolution spatiale du détecteur, et qui sont d'ailleurs inutiles à la détection proprement dite.

Dans le cas de ces figures 1 et 2, les moyens 26 de création du champ électrique sont des moyens d'application d'une tension électrique entre les pistes 22 et les feuilles 4, cette tension étant apte à provoquer la collection des porteurs de charge par les pistes 22.

On précise que le plan de coupe P (figure 2) traverse les pistes conductrices d'une même rangée de pistes (rangée qui est horizontale sur la figure 1), les pistes de cette rangée appartenant respectivement aux couches 6.

Dans un mode de réalisation particulier non représenté, le matériau constitutif des feuilles 4 est encore électriquement conducteur mais les pistes 22 ne sont plus contenues dans les couches 6 de matériau semiconducteur : chaque groupe de pistes se trouve à l'interface de la couche de matériau semiconducteur correspondante et de la feuille de matériau conducteur qui est associée à une couche adjacente de matériau semiconducteur.

Dans ce cas, on prévoit un matériau électriquement isolant pour isoler électriquement les pistes 22 des feuilles 4 de matériau conducteur mais l'on peut encore utiliser les mêmes moyens de création de champ électrique que précédemment.

Le détecteur des figures 1 et 2 est muni d'un dispositif électronique 30 de lecture des signaux électriques fournis par les pistes 22 lorsque celles-ci collectent les porteurs de charge.

On voit sur la figure 2 qu'une extrémité 32 de chaque piste 22 est recourbée pour s'étendre sur un bord 14 de la couche 6 correspondante, ce bord étant situé sur la face 10 de l'empilement des feuilles 4 et des couches 6.

Le dispositif électronique de lecture 30 comprend des plots électriquement conducteur 34 qui sont respectivement en contact avec les extrémités recourbées 32 des pistes 22.

Ce contact peut être réalisé par l'intermédiaire de boules 36 de brasure, par exemple des boules d'indium, ou par l'intermédiaire de fils électriquement conducteurs ou même en appliquant les extrémités recourbées des pistes contre les plots du dispositif de lecture associé, par des moyens appropriés, par exemple par pressage ou avec une colle électriquement conductrice.

On précise que les plots 34 sont disposés suivant le même pas que les extrémités recourbées 32 des pistes 22.

On peut utiliser un matériau semiconducteur non dopé ou, au contraire, un matériau semiconducteur dopé par exemple de type N, auquel cas les électrons sont les porteurs de charge majoritaires, ou de type P, auquel cas les porteurs majoritaires sont les trous.

Pour collecter les porteurs de charge, on peut mettre les feuilles conductrices 4 à un potentiel négatif et les plots conducteurs 34 (et donc les pistes 22) à la masse ou mettre les feuilles 4 à la masse et les plots conducteurs 34 (et donc les pistes 22) à un potentiel positif.

Dans les deux cas les trous engendrés dans les couches 6 de matériau semiconducteur sont attirés par les feuilles 4 de matériau conducteur tandis que les électrons engendrés dans ces couches 6 sont attirés par les pistes 22 et collectés par celles-ci, fournissant ainsi des signaux électriques qui sont lus grâce au dispositif 30.

Inversement on peut porter les feuilles 4 à un potentiel positif et mettre les plots 34 à la masse ou mettre les feuilles 4 à la masse et porter les plots 34 à un potentiel négatif. Dans les deux cas les électrons sont attirés par les feuilles et les trous sont attirés par les pistes et collectés par celles-ci, fournissant encore des signaux électriques qui sont lus grâce au dispositif 30.

Dans chaque cas, les pistes 22 convertissent, sous forme numérique et électrique, l'image analogique qui est transportée par les rayons X que l'on détecte.

Dans l'exemple représenté sur la figure 2, toutes les pistes 22 sont mises à la masse par l'intermédiaire des plots électriquement conducteurs 34 et l'on porte à un potentiel négatif toutes les feuilles de matériau conducteur 4 grâce à une source de tension 38.

Dans ce cas, les pistes 22 collectent des électrons.

Pour porter à un potentiel négatif (par exemple égal à -500 V) toutes les feuilles 4 de matériau conducteur on utilise une plaque électriquement isolante 40 sur une face de laquelle sont formées des pistes 42 parallèles électriquement conductrices dont la pas est égal à celui des feuilles 4.

Toutes ces pistes 42 sont reliées à une piste 44 également formée sur cette face de la plaque 40 et cette piste 44 est reliée à la source de tension négative 38.

On applique alors la face de la plaque 40 portant les pistes 42 sur une face de l'empilement 2 sur laquelle apparaissent également des bords des feuilles 4, cette face étant différente des faces 8 et 10, de telle manière que les pistes 42 viennent respectivement en contact avec les bords des feuilles 4, ce qui permet de porter toutes ces feuilles 4 au potentiel négatif souhaité.

La plaque 40 est par exemple en céramique ou en polymère et les pistes 42 et 44 en or.

De préférence, pour des raisons d'encombrement et de vitesse de lecture, le dispositif électronique de lecture 30 est du genre de ceux qui sont utilisés dans les capteurs CCD.

Pour un détecteur de dimensions modestes, on peut connecter directement les pistes 22 de l'empilement 2 aux pixels d'un capteur CCD sans revêtement (« coating »).

Dans le cas d'un détecteur de plus grandes dimensions, on peut prévoir une matrice de connexion intermédiaire entre les pistes 22 de l'empilement 2 et le dispositif de lecture par exemple de type CCD.

Les plots conducteurs 34 se trouvent alors sur l'une des faces de cette matrice pour être respectivement connectés aux extrémités recourbées 32 des pistes 22 et ces plots sont électriquement reliés aux pixels d'un dispositif de lecture par exemple de type CCD par l'intermédiaire de connexions électriques qui traversent cette matrice.

L'épaisseur d'un détecteur conforme à l'invention comme par exemple le détecteur de la figure 1, cette épaisseur étant comptée de la face 8 à la face 10, peut être du même ordre de grandeur que l'épaisseur d'un détecteur à trous du genre de ceux qui ont été décrits plus haut, cette épaisseur étant adaptée en fonction du pouvoir d'arrêt recherché.

Il convient de noter que le matériau constitutif des feuilles 4 peut être chimiquement inerte ou mauvais conducteur de l'électricité (on considérera par la suite un cas où il est isolant), contrairement au matériau électrochimiquement usinable que l'on doit utiliser pour les détecteurs à trous.

Les épaisseurs des feuilles 4 de matériau conducteur (ou isolant comme on le verra plus loin) et des couches 6 de matériau semiconducteur sont fixées pour optimiser la résolution spatiale du détecteur et le rendement de conversion (conversion et collection des charges). De préférence, on recherche les épaisseurs les plus petites possibles, typiquement de l'ordre de 100 µm à quelques centaines de micromètres.

A titre d'exemple on peut utiliser des feuilles 4 de matériau conducteur dont l'épaisseur est de l'ordre de 200 µm et des couches 6 de matériau semiconducteur dont l'épaisseur est de l'ordre de 200 µm.

Il convient de noter que, dans les détecteurs à trous de l'art antérieur, l'épaisseur des feuilles de métal, comptée perpendiculairement à la direction du rayonnement incident, est fixée pour que ces feuilles puissent être attaquées chimiquement (épaisseur de l'ordre de 200 µm).

Dans la présente invention, cette contrainte est sans objet et l'épaisseur des feuilles 4 de matériau (conducteur ou isolant) et des couches 6 de matériau semiconducteur est entièrement fixée par les contraintes d'application.

Il convient également de noter que la structure d'un détecteur conforme à l'invention permet d'améliorer de façon spectaculaire le rendement (de l'ordre de 50%), avec une épaisseur appropriée de matériau suivant la direction du rayonnement à détecter, et la résolution spatiale qui peut être de l'ordre de 100 µm en choisissant un pas approprié pour les pistes 22.

En effet, dans la direction perpendiculaire aux feuilles 4 la résolution spatiale est déterminée par le pas entre les feuilles 4 et entre les pistes (qui peut être de l'ordre de 50 µm à 200 µm).

Pour la détection de rayons X, on utilise de préférence un métal lourd, par exemple du tungstène ou du plomb.

A titre purement indicatif et nullement limitatif, dans le cas où l'on veut détecter des photons X dont l'énergie vaut 5 MeV, on utilise un détecteur de 2 cm d'épaisseur (comptée de la face 8 à la face 10 de la figure 1), des couches 6 en CdTe ou en diamant de 100 µm d'épaisseur et des feuilles 4 de tungstène de 400 µm d'épaisseur avec des pistes 22 au pas de 0,5 mm. Ces dimensions peuvent être réduites si cela est nécessaire, un pas de 100 µm étant technologiquement réalisable.

On explique maintenant un exemple de procédé de fabrication du détecteur des figures 1 et 2.

Les feuilles 4 de matériau conducteur peuvent être réalisées par un procédé quelconque.

Leur surface doit être suffisamment conductrice et non oxydée.

Cette surface peut être revêtue, si cela est nécessaire, d'un dépôt métallique plus adapté à la réalisation d'un contact ohmique avec le matériau semiconducteur, par exemple une couche d'or.

Pour former sur les couches 6 de matériau semiconducteur les pistes 22 qui peuvent être en or ou en un métal mieux adapté au semiconducteur utilisé, on peut procéder de la façon suivante :
- on dépose une première épaisseur de matériau semiconducteur (par exemple 50 µm) sur l'une des faces de l'une des feuilles conductrices 4 par exemple par dépôt chimique en phase vapeur (« chemical vapor deposition »), par épitaxie, par coulage en bande, par dépôt en phase liquide ou par un dépôt sol-gel,
- on dépose des pistes 22 en or ayant par exemple une largeur de 5 µm par évaporation à travers un masque ou par un procédé de photolithographie, sur le matériau semiconducteur ainsi déposé, et
- on dépose une deuxième épaisseur de matériau semiconducteur sur la première épaisseur de manière à recouvrir les pistes 22 et à obtenir l'épaisseur totale souhaitée de matériau semiconducteur (par exemple 100 µm).

On procède de même pour chaque feuille conductrice 4.

En variante, on peut aussi déposer, sur deux faces opposées de deux feuilles successives, une demi-couche du matériau semiconducteur puis former sur l'une des demi-couches le groupe de pistes.

Les feuilles conductrices 4 ainsi recouvertes sont alors empilées de façon à obtenir l'alternance de feuilles conductrices 4 et de couches de matériau semiconducteur 6 et sont maintenues au contact les unes des autres par une légère pression qui est exercée par des moyens appropriés, par exemple un dispositif mécanique, ou par une colle électriquement conductrice.

Le détecteur conforme à l'invention, qui est schématiquement représenté en perspective coupée sur la figure 3, diffère de celui de la figure 1 par le fait que les feuilles 4 sont électriquement isolantes, par exemple en matière plastique, dans le cas de la figure 3, en vue de détecter par exemple des neutrons, et par le fait que l'on interpose entre chaque feuille de matériau isolant 4 et la couche de matériau semiconducteur correspondante une couche mince (épaisseur de l'ordre de 5 µm à 10 µm) électriquement conductrice 46 par exemple en or ou en cuivre, comme on le voit sur la figure 3.

Dans ce cas on peut encore porter toutes les couches électriquement conductrices 46 au potentiel électrique souhaité par rapport aux pistes 22, par l'intermédiaire de pistes électriquement conductrices du genre des pistes 42 formées sur la plaque isolante 40 (figure 1).

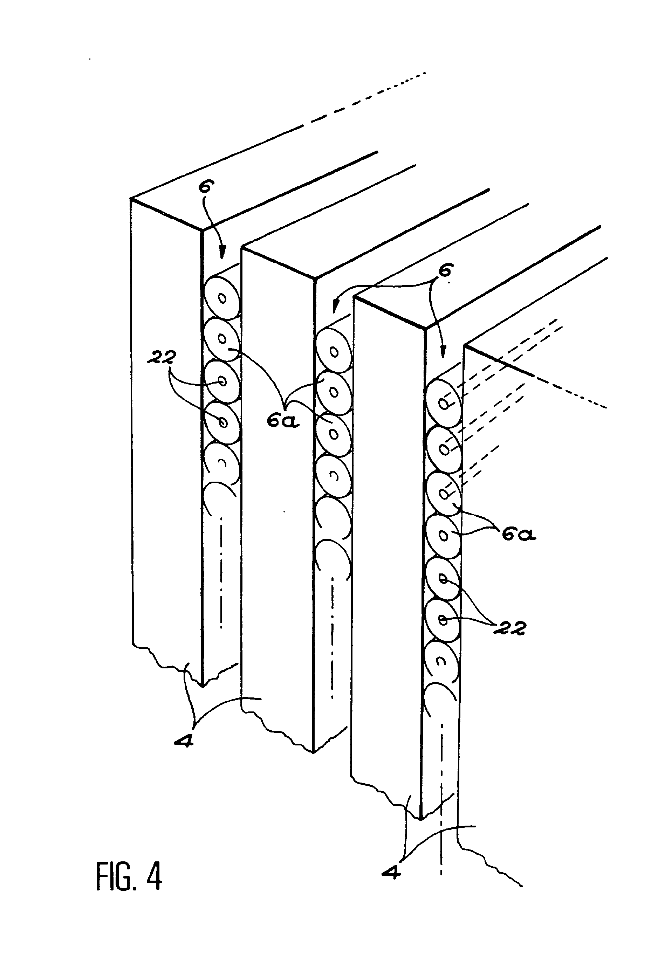

La figure 4 est une vue en perspective schématique et partielle d'une variante de réalisation du détecteur de la figure 1.

Dans le détecteur de la figure 4, chaque couche 6 est une nappe de fils juxtaposés 6a faits du matériau semiconducteur, chaque fil contenant, suivant son axe, un fil métallique constituant une piste 22.

Les fils 6a munis de ces pistes 22 peuvent être obtenus par extrusion ou filage.

Les documents cités dans la présente description sont les suivants :
[1] V. Perez-Mendez, S.I. Parker, IEEE Trans. Nucl.Sci. NS-21 (1974) 45
[2] S.N. Kaplan, L. Kaufman, V. Perez-Mendez, K. Valentine, Nuclear Instruments and Methods 106 (1973)397
[3] A.P. Jeavons, G. Charpak, R.J. Stubbs, NIM 124 (1975) 491-503
[4] Jean-Louis Gerstenmayer, Damien Lebrun et Claude Hennion, « Multistep parallel plate avalanche chamber as a 2D imager for MeV pulsed radiography », Proc. SPIE, vol.2859, p.107 à 114, colloque du 7 au 8 août 1996, Denver, Colorado, U.S.A.
[5] J.L. Gerstenmayer, « High DQE performance X- and Gamma-ray fast imagers : emergent concepts », 1998 Symposium on Radiation Detection and Measurement, Ann Arbor, Michigan, 11 au 14 mai 1998, Proceedings in Nuclear and Methods in Physics Research A.

## Revendications

1. Détecteur bidimensionnel d'un rayonnement ionisant incident constitué de premières particules, ce détecteur comprenant un empilement (2) de feuilles (4) d'un premier matériau qui est apte à émettre des deuxièmes particules par interaction avec le rayonnement ionisant incident, ce détecteur étant **caractérisé en ce qu'**il comprend en outre :
- des couches (6) d'un matériau semiconducteur qui alternent avec les feuilles du premier matériau et sont capables d'être ionisées par les deuxièmes particules, chacune des couches étant associée à l'une des feuilles, l'empilement ayant des première (8) et deuxième (10) faces opposées, contenant chacune des bords respectifs (12, 14) des feuilles et des couches, la première face (8) étant celle qui reçoit le rayonnement ionisant incident, la longueur de chaque feuille, comptée de la première à la deuxième face, étant au moins égale au dixième du libre parcours moyen des premières particules dans le premier matériau,
- des groupes de pistes (22) parallèles et électriquement conductrices qui s'étendent de la première à la deuxième face, parallèlement aux couches (6), chaque groupe étant associé à l'une des couches et en contact avec celle-ci, les pistes étant destinées à collecter des porteurs de charge qui sont engendrés dans les couches par interaction de celles-ci avec les deuxièmes particules et éventuellement avec les premières particules et qui sont représentatifs, en intensité et en position, des premières particules, et
- des moyens (26) de création d'un champ électrique apte à provoquer la collection des porteurs de charge par les pistes (22).

2. Détecteur selon la revendication 1, dans lequel le premier matériau est électriquement conducteur, les pistes (22) sont électriquement isolées des feuilles et les moyens de création du champ électrique comprennent des moyens (26) d'application d'une tension électrique entre les pistes (22) et les feuilles (4), cette tension étant apte à provoquer la collection des porteurs de charge par les pistes.

3. Détecteur selon la revendication 1, dans lequel chaque groupe de pistes (22) est contenu dans la couche (6) à laquelle il est associé.

4. Détecteur selon la revendication 3, dans lequel le premier matériau est électriquement conducteur et les moyens de création du champ électrique comprennent des moyens (26) d'application d'une tension électrique entre les pistes (22) et les feuilles (4), cette tension étant apte à provoquer la collection des porteurs de charge par les pistes.

5. Détecteur selon l'une quelconque des revendications 1 et 3, dans lequel les feuilles (4) sont électriquement isolantes, une couche (46) électriquement conductrice est interposée entre chaque couche (6) de matériau semiconducteur et la feuille (4) qui lui est associée et les moyens de création du champ électrique comprennent des moyens (26) d'application d'une tension électrique entre les pistes (22) et les couches électriquement conductrices (46), cette tension étant apte à provoquer la collection des porteurs de charge par les pistes.

6. Détecteur selon l'une quelconque des revendications 1 à 5, dans lequel le matériau semiconducteur est choisi dans le groupe comprenant le diamant en couche mince, CdTe, ZnTe, CdZnTe, AsGa et ses alliages, InP, InSb, SiC, le silicium cristallin, le silicium amorphe, les cristaux organiques, le sélénium amorphe et le verre chalcogénure As₂S₃.

7. Détecteur selon l'une quelconque des revendications 1 à 6, comprenant en outre un dispositif électronique (30) de lecture des signaux électriques fournis par les pistes (22) lorsque celles-ci collectent les porteurs de charge.

8. Détecteur selon la revendication 7, dans lequel une extrémité (32) de chaque piste est recourbée pour s'étendre sur un bord (14) de la couche correspondante (6) de matériau semiconducteur, ce bord étant situé sur la deuxième face (10) de l'empilement (2), et le dispositif (30) comprend des plots électriquement conducteurs (34) qui sont respectivement en contact avec les extrémités recourbées (32) des pistes (22).

9. Procédé de fabrication du détecteur selon l'une quelconque des revendications 1 à 8, dans lequel on forme, sur chaque feuille (4), une couche (6) du matériau semiconducteur, cette couche étant munie du groupe de pistes (22) qui lui est associé et l'on assemble les feuilles munies des couches de matériau semiconducteur et des pistes pour obtenir l'empilement (2) où ces couches de matériau semiconducteur alternent avec les feuilles (22).

10. Procédé selon la revendication 9, dans lequel on forme sur chaque feuille (4) une première couche de matériau semiconducteur dont l'épaisseur est inférieure à celle de ladite couche (6) du matériau semiconducteur, on forme le groupe de pistes (22) sur cette première couche et l'on forme, sur la première couche, une deuxième couche de matériau semiconducteur qui recouvre ces pistes, l'épaisseur totale des première et deuxième couches étant égale à l'épaisseur de ladite couche (6) de matériau semiconducteur.

11. Procédé de fabrication du détecteur selon l'une quelconque des revendications 1 à 8, dans lequel on dépose, sur deux faces opposées de deux feuilles (4) successives, une demi-couche du matériau semiconducteur puis on forme sur l'une des demi-couches le groupe de pistes (22) et l'on assemble les feuilles ainsi recouvertes pour obtenir l'empilement où les couches alternent avec les feuilles.

## Claims

1. Two-dimensional detector of incident ionizing radiation composed of first particles, this detector comprising a stack (2) of sheets (4) of a first material capable of emitting second particles by interaction with the incident ionizing radiation, this detector being **characterized in that** it also comprises:
- layers (6) of a semiconducting material that alternate with sheets of the first material and may be ionized by the second particles, each of the layers being associated with one of the sheets, the stack having opposite first (8) and second (10) faces each containing corresponding edges (12, 14) of sheets and layers, the first face (8) being that which receives the incident ionizing radiation, the length of each sheet measured from the first as far as the second face being equal to at least one tenth of the free average path of the first particles in the first material,
- groups of parallel and electrically conducting tracks (22) extending from the first to the second face parallel to the layers (6), each group being associated with one of the layers and in contact with it, the tracks being designed to collect charge carriers that are generated in the layers by interaction of the layers with the second particles and possibly with the first particles and that are representative of the first particles in intensity and in position, and
- means (26) of creating an electric field capable of causing collection of charge carriers through the tracks (22).

2. Detector according to claim 1, in which the first material is electrically conducting, the tracks (22) are electrically insulated from the sheets and the means of creating the electric field comprise means (26) of applying a voltage between the tracks (22) and the sheets (4), this voltage able to cause collection of charge carriers through the tracks.

3. Detector according to claim 1, in which each group of tracks (22) is fully located within the layer (6) with which it is associated.

4. Detector according to claim 3, in which the first material is electrically conducting and the means of creating the electric field comprise means (26) of applying a voltage between the tracks (22) and the sheets (4), this voltage able to cause collection of charge carriers through the tracks.

5. Detector according to either of claims 1 and 3, in which the sheets (4) are electrically insulating, an electrically conducting layer (46) is inserted between each layer (6) of semiconducting material and the sheet (4) that is associated with it and the means of creating the electric field comprise means (26) of applying a voltage between the tracks (22) and the electrically conducting layers (46), this voltage able to cause collection of charge carriers through the tracks.

6. Detector according to any one of claims 1 to 5, in which the semiconducting material may be chosen from among the group including thin layers of diamond, CdTe, ZnTe, CdZnTe, AsGa and their alloys, InP, InSb, SiC, crystalline silicon, amorphous silicon, organic crystals, amorphous selenium and chalcogenic glass (As₂S₃).

7. Detector according to any one of claims 1 to 6, also comprising an electronic device (30) for reading electrical signals output by tracks (22) when the tracks collect charge carriers.

8. Detector according to claim 7, in which one end (32) of each tracks is curved to extend onto an edge (14) of the corresponding layer (6) of semiconducting material, this edge being located on the second face (10) of the stacks (2), and the device (30) comprises electrically conducting pads (34) that are in contact with the corresponding curved ends (32) of the tracks (22).

9. Process for manufacturing the detector according to any one of claims 1 to 8, in which a layer (6) of semiconducting material is formed on each sheet (4), this layer being provided with the group of tracks (22) associated with it, and the sheets provided with layers of semiconducting material and tracks are assembled together to obtain a stack (2) in which these layers of semiconducting material alternate with the sheets (22).

10. Process according to claim 9, in which a first layer of semiconducting material is formed on each sheet (4), the thickness being less than the thickness of the said layer (6) of semiconducting material, the group of tracks (22) is formed on this first layer and a second layer of semiconducting material that covers these tracks is formed on the first layer, the total thickness of the first and second layers being equal to the thickness of the said layer (6) of semiconducting material.

11. Process for manufacturing the detector according to any ane of claims 1 to 8, in which a half layer of semiconducting material is deposited on the two opposite faces of two successive sheets (4), and then the group of tracks (22) is formed on one of the half layers and the sheets thus covered are assembled together to create a stack in which the layers alternate with the sheets.

## Patentansprüche

1. Zweidimensionaler Detektor für eine einfallende, durch erste Partikel gebildete ionisierende Strahlung, wobei dieser Detektor einen Stapel (2) von Folien (4) aus einem ersten Material umfasst, das fähig ist, durch Interaktion mit der einfallenden ionisierenden Strahlung zweite Partikel zu emittieren, wobei dieser Detektor
**dadurch gekennzeichnet ist, dass** er außerdem umfasst:
- Schichten (6) aus einem Halbleitermaterial, die sich abwechseln mit den Folien aus dem ersten Material und die durch die zweiten Partikel ionisierbar sind, wobei jede der Schichten einer der Folien zugeordnet ist und der Stapel entgegengesetzte Seiten aufweist, eine erste (8) und eine zweite (10), von denen jede jeweils Ränder (12, 14) der Folien und der Schichten umfasst, wobei die erste Seite (8) diejenige ist, welche die einfallende ionisierende Strahlung empfängt, und die Länge jeder Folie, gemessen von der ersten bis zur zweiten Seite, wenigstens gleich einem Zehntel des mittleren freien Wegs der ersten Partikel in dem ersten Material ist,
- Gruppen paralleler und elektrisch leitender Bahnen (22), die sich von der ersten zur zweiten Seite erstrecken, parallel zu den Schichten (6), wobei jede Gruppe einer der Schichten zugeordnet ist und mit dieser Kontakt hat, und die Bahnen dazu dienen, Ladungsträger einzusammeln, die in den Schichten durch Interaktion von diesen mit den zweiten Partikeln und eventuell mit den ersten Partikeln erzeugt werden und die bezüglich Intensität und Position für die ersten Partikel repräsentativ sind, und
- Einrichtungen (26) zur Erzeugung eines elektrischen Felds, fähig das Einsammeln der Ladungsträger durch die Bahnen (22) zu bewirken.

2. Detektor nach Anspruch 1, bei dem das erste Material elektrisch leitend ist, die Bahnen (22) von den Folien elektrisch isoliert sind und die Einrichtungen zur Erzeugung des elektrischen Feldes Einrichtungen (26) zum Anlegen einer elektrischen Spannung zwischen den Bahnen (22) und den Folien (4) umfassen, wobei diese Spannung fähig ist, das Einsammeln der Ladungsträger durch die Bahnen zu bewirken.

3. Detektor nach Anspruch 1, bei dem jede Gruppe von Bahnen (22) in der Schicht (6) enthalten ist, der sie zugeordnet ist.

4. Detektor nach Anspruch 3, bei dem das erste Material elektrisch leitend ist und die Einrichtungen zur Erzeugung des elektrischen Felds Einrichtungen (26) zum Anlegen einer elektrischen Spannung zwischen den Bahnen (22) und den Folien (4) umfassen, wobei diese Spannung fähig ist, das Einsammeln der Ladungsträger durch die Bahnen zu bewirken.

5. Detektor nach einem der Ansprüche 1 und 3, bei dem die Folien (4) elektrisch isolierend sind, eine elektrisch leitende Schicht (46) eingefügt ist zwischen jeweils einer Schicht (6) aus Halbleitermaterial und der ihr zugeordneten Folie (4), und die Einrichtungen zur Erzeugung des elektrischen Felds Einrichtungen (26) zum Anlegen einer elektrischen Spannung zwischen den Bahnen (22) und elektrisch leitenden Schichten (46) umfassen, wobei diese Spannung fähig ist, das Einsammeln der Ladungsträger durch die Bahnen zu bewirken.

6. Detektor nach einem der Ansprüche 1 bis 5, bei dem das Halbleitermaterial aus der Gruppe gewählt wird, die Dünnschichtdiamant, CdTe, ZnTe, CdZnTe, AsGa und seine Legierungen, InP, InSb, SiC, kristallines Silicium, amorphes Silicium, die organischen Kristalle, amorphes Selen und Chalkogenglas As₂S₃ umfasst.

7. Detektor nach einem der Ansprüche 1 bis 6, der außerdem eine elektronische Lesevorrichtung (30) der durch die Bahnen (22) gelieferten elektrischen Signale umfasst, wenn diese die Ladungsträger einsammeln.

8. Detektor nach Anspruch 7, bei dem ein Ende (32) jeder Bahn umgebogen ist, um sich über einem Rand (14) der entsprechenden Schicht (6) aus Halbleitermaterial zu erstrecken, wobei dieser Rand sich auf der zweiten Seite (10) des Stapels (2) befindet, und die Vorrichtung (30) elektrisch leitfähige Elemente (34) umfasst, die jeweils mit den umgebogenen Enden (32) der Bahnen (22) Kontakt haben.

9. Verfahren zur Herstellung des Detektor nach einem der Ansprüche 1 bis 8, in dem man auf jeder Folie (4) eine Schicht (6) aus Halbleitermaterial ausbildet, wobei diese Schicht die ihr zugeordnete Gruppe von Bahnen (22) enthält und man die mit Schichten aus Halbleitermaterial und Bahnen versehenen Folien zusammenfügt, um den Stapel (2) herzustellen, in dem sich diese Halbleitermaterialschichten mit den Folien (4) abwechseln.

10. Verfahren nach Anspruch 9, in dem man auf jeder Folie (4) eine erste Schicht aus Halbleitermaterial ausbildet, deren Dicke kleiner ist als die der genannten Schicht (6) aus Halbleitermaterial, man die Gruppe aus Bahnen (22) auf dieser ersten Schicht ausbildet und auf der ersten Schicht eine zweite Schicht aus Halbleitermaterial ausbildet, die diese Bahnen überdeckt, wobei die Gesamtdicke der ersten und zweiten Schicht gleich der Dicke der genannten Halbleitermaterialschicht (6) ist.

11. Verfahren zur Herstellung des Detektors nach einem der Ansprüche 1 bis 8, bei dem man auf zwei entgegengesetzten Seiten von zwei aufeinanderfolgenden Folien (4) jeweils eine Teilschicht aus Halbleitermaterial abscheidet, man dann auf einer der Teilschichten die Gruppe von Bahnen (22) ausbildet und man die derart überzogenen Folien zusammenfügt, um den Stapel herzustellen, in dem sich die Schichten mit den Folien abwechseln.
